# EUROPEAN PATENT SPECIFICATION

(11) **EP 3 090 860 B1**
(45) Date of publication and mention of the grant of the patent: **11.09.2019**
(21) Application number: 15166310.1
(22) Date of filing: 05.05.2015
(51) Int. Cl.: B29C 65/36, B65B 51/22, B29C 65/50, B65H 19/00, B29L 9/00, B29K 705/00, B29K 705/02, B29K 711/12

(54) **INDUCTION HEATING SEALING DEVICE**
INDUKTIONS-HEIßSIEGELVORRICHTUNG
DISPOSITIF DE SCELLAGE PAR CHAUFFAGE PAR INDUCTION

(43) Date of publication of application: 09.11.2016
(73) Proprietor: Tetra Laval Holdings & Finance S.A., 1009 Pully (CH)
(72) Inventor: Babini, Andrea, 41124 Modena (IT)
(74) Representative: Tetra Pak - Patent Attorneys SE

(56) References cited:
- EP-A1- 0 387 512
- EP-A1- 2 520 416
- EP-A1- 2 520 417
- WO-A1-2015/078907

## Description

The present invention relates to an induction heating sealing device, in particular an induction heating sealing device for applying a sealing strip to a web of packaging material for producing sealed packages of pourable food products.

As it is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing a laminated web of packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a tube is formed continuously from the web-fed packaging material. More specifically, the web of packaging material is unwound off a reel and fed through an aseptic chamber of the packaging machine, where it is sterilized, e.g. by applying a sterilizing agent such as hydrogen peroxide, which is subsequently evaporated by heating, and/or by subjecting the packaging material to radiation of appropriate wavelength and intensity. The web of packaging material so sterilized is then maintained in a sterile-air environment, and is vertically fed through a number of forming assemblies which interact with the packaging material to fold it gradually from web form into a tube shape.

Afterwards, the tube is filled with the sterilized or sterile-processed food product and is sealed and cut at equally spaced cross sections into pillow-packs, which are subsequently folded mechanically to form parallelepiped packages.

Before reaching the forming assemblies, the web of packaging material is fed through an apparatus for applying a sealing strip made of heat-seal plastic material, to which the packaging material is subsequently heat sealed to form the vertical tube.

More specifically, the sealing strip is normally heat sealed to the inner heat-seal plastic material layer of the web of packaging material at a strip sealing station to which the web of packaging material, heated beforehand, and the sealing strip are fed along different paths, and where the sealing strip is pressed onto a first longitudinal edge of the web of packaging material. After application, the sealing strip has a first portion heat sealed to the first longitudinal edge of the web, and a second portion projecting therefrom.

On interacting with the forming assemblies, the second longitudinal edge of the web is laid on the outside of the first longitudinal edge with respect to the axis of the tube being formed. More specifically, the sealing strip is located entirely inside the tube, and the face of the second longitudinal edge facing the axis of the tube is superimposed partly on the second portion of the sealing strip, and partly on the face of the first longitudinal edge located on the opposite side to the first portion of the sealing strip.

Packaging machines of the above type are known in which the first longitudinal edge and the second longitudinal edge are heat sealed to form a longitudinal seal along the tube; more specifically, the heat-seal operation comprises a heating step to heat the second longitudinal edge without the sealing strip, and a pressure step to compress the sealing strip, the first longitudinal edge and the second longitudinal edge.

The heating step melts the heat-seal plastic material layer of the second longitudinal edge, which transmits heat by conduction to the first longitudinal edge and the sealing strip, so as to melt the heat-seal plastic material layer of the first longitudinal edge and the heat-seal material of the sealing strip.

During the pressure step, the sealing strip, the first longitudinal edge and the second longitudinal edge are pressed together, so that the heat-seal material of the sealing strip and the heat-seal plastic material layers of the first longitudinal edge and the second longitudinal edge blend completely and form the molecular bonds defining the longitudinal seal of the tube.

The sealing strip performs the following functions:
- to prevent the edges of the packaging material forming the longitudinal seal from absorbing the packed product;
- to improve the gas barrier properties of the longitudinal seal area;
- to strengthen the longitudinal seal.

In the case of barrier material comprising a sheet of electrically conductive material, e.g. aluminum, the sealing strip is sealed to the first longitudinal edge by induction heat-sealing.

More specifically, the packaging machine comprises a sealing device which faces the web of packaging material.

The sealing device substantially comprises one or more inductive elements electrically fed by a high-frequency alternate current generator.

In use, the alternate current flowing inside the inductive elements generates an alternate magnetic field flux that generates eddy currents in the aluminium layer to melt the heat-seal plastic material locally.

As explained above, during operation of the packaging machine the packaging material is unwound off a reel to form the packages.

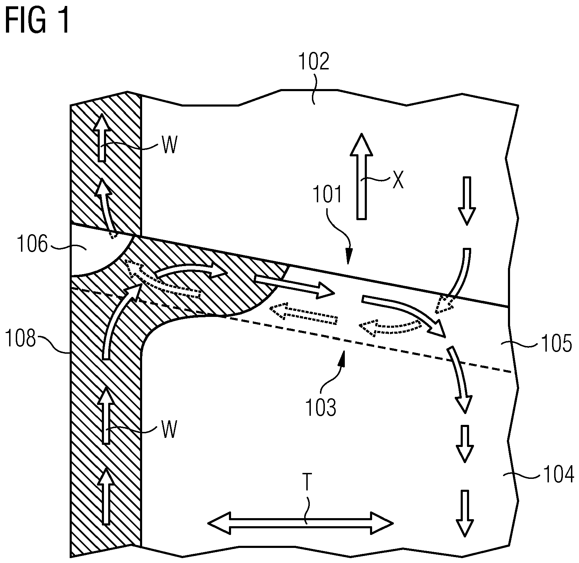

As shown in Figure 1, when a reel is exhausted, i.e. almost empty, a trailing edge 101 of the exhausted real 102 is sealed to a leading edge 103 of a new reel 104, whilst the packaging material is advanced along an advancing direction X. This operation can be carried out automatically, so that the packaging machine does not need to be stopped when the exhausted reel 102 is replaced with the new reel 104.

However, the region at which the trailing edge 101 of the exhausted reel 102 is sealed to the leading edge 103 of the new reel 104 defines a splice area 105 that creates a discontinuity for the eddy currents generated by the inductive element in the packaging material of the exhausted reel 102 and in the packaging material of the new reel 104 during the sealing phase, as described above.

The inductive element, when heating a continuous, i.e. uninterrupted, web of packaging material, generates eddy currents that are substantially parallel to the advancing direction X.

The inductive element, when heating a portion of packaging material comprising the splice area 105, generates in the trailing edge 101 and in the leading edge 103 eddy currents that do not cross the splice area 105, but define a sort of curved path W. In other words, the splice area 105 creates a border effect of the eddy currents on both the overlapped edges of the splice area 105.

In Figure 1, the hatching illustrates the heating pattern generated by the eddy currents. The heating pattern is not uniform along the splice area, i.e. in a transversal direction T, which is perpendicular to the advancing direction X. In particular, the heating pattern has a cold zone 106 positioned close to a side edge 108 of the packaging.

In particular, the temperature of the packaging material at the cold zone 106 can be not high enough to provide a proper melting of the heat-seal plastic material layers and, therefore, a proper sealing.

EP0387512 discloses an arrangement for the continuous carrying out by means of induction heat of a continuous weld along a moving web of laminated packing material. The arrangement comprises two similar elongated metal plates with two slots. The metal plates are arranged at some distance from one another and are connected electrically to one another and to an a.c. source. The laminated packing material which is to be welded together is advanced between the two plates. Within the plates pressure rollers are arranged in a recess.

EP2520417 discloses a heating induction sealing device for forming a seal in a packaging material comprising an electrically conductive element and advancing, in use, along a first direction; the sealing device comprises at least one inductive element; the inductive element comprises a first leg and a second leg within which alternate currents flow, in use, in opposite direction; the first leg is configured to induce, in use, a first portion of an eddy current within an area to be sealed of packaging material; the second leg faces the first leg along a second direction (C); the second leg is configured to induce, in use, a second portion of eddy current within area the to be sealed of packaging material; the first leg and the second leg have a length in a third direction parallel, in use, to the first direction and transversal to the second direction; the first leg and the second leg are nonsymmetrical with respect to the third direction, so that the seal is formed as continuous along the second direction.

EP2520416 discloses a heating induction sealing device for forming a seal in a packaging material comprising an electrically conductive element and advancing along a direction; the sealing device comprises one first inductive element and one second inductive element; the first inductive element comprises a first portion, facing the second inductive element and defining with the second inductive element a passage for the packaging material, and a second portion; the sealing device is selectively arrangeable in a first configuration, in which alternate currents flow within the first inductive element and the second inductive element; the first portion and the second inductive element are configured to generate a first magnetic flux transversally to said direction, when the sealing device is arranged in a first configuration; the second portion is configured to generate, in use, a second magnetic flux with a main component transaversal to said direction, when the sealing device is arranged in the first configuration.

An object of the invention is to improve the induction heating sealing devices for induction heating sealing a packaging material.

Another object of the invention is to provide an induction heating sealing device which generates a more uniform heating pattern - with respect to the know induction heating sealing devices - at a region of a sheet of packaging material at which a portion of the packaging material has been spliced to another portion of the packaging material.

According to the present invention, there is provided an induction heating sealing device as claimed in claim 1.

A preferred, non-limiting embodiment of the invention will be described by way of example with reference to the accompanying drawings, in which:
Figure 1 schematically shows a heating pattern generated by eddy currents induced by a prior-art induction heating sealing device, in the region of a splice area of a packaging material, at which a trailing edge of an exhausted reel of packaging material is spliced to a leading edge of a new reel of packaging material;
Figure 2 shows a packaging machine comprising an induction heating sealing device according to the invention;
Figure 3 shows a strip sealing station of the packaging machine of Figure 2
Figure 4 shows a heat-sealing station of the packaging machine of Figure 2;

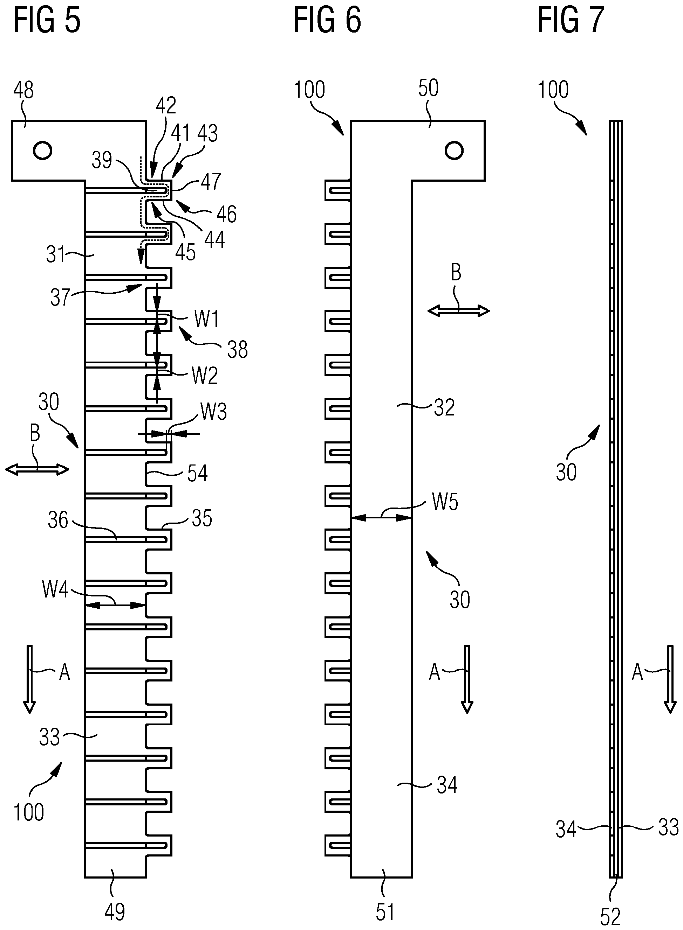

Figure 5 is a top view of the induction heating sealing device according to the invention;
Figure 6 is a bottom view of the induction heating sealing device of Figure 5;
Figure 7 is a side view of the induction heating sealing device of Figure 5;
Figure 8 schematically shows a heating pattern generated by eddy currents induced by the induction heating sealing device according to the invention, in the region of a splice area of a packaging material, at which a trailing edge of an exhausted reel of packaging material is spliced to a leading edge of a new reel of packaging material.

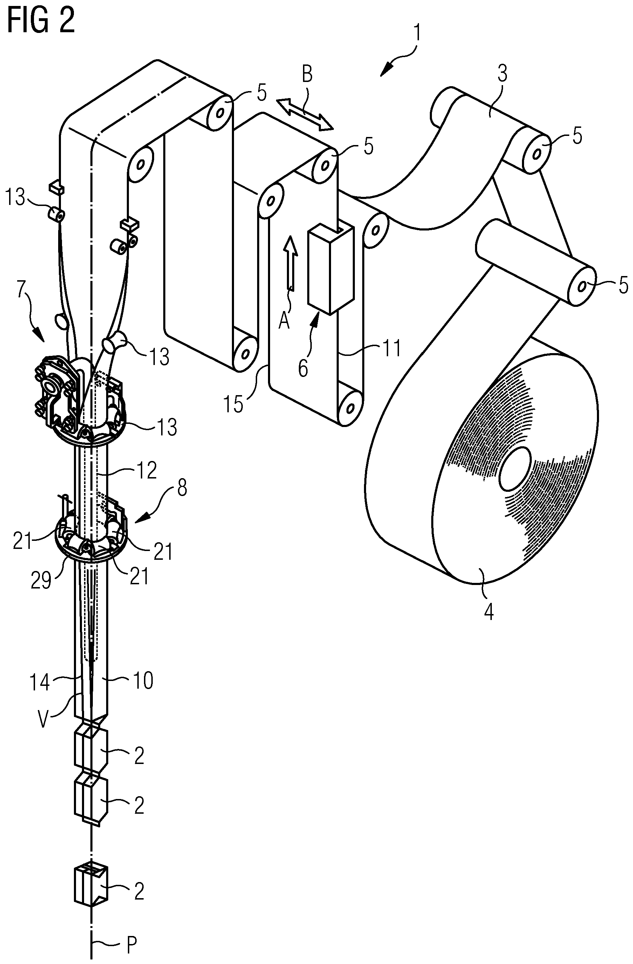

With reference to Figure 2, there is shown a packaging machine 1 for continuously producing sealed packages 2 of a food product from a web 3 of packaging material, which is unwound off a reel 4 and fed along a forming path P.

The packaging machine 1 preferably produces packages 2 of a pourable food product, such as pasteurized or UHT milk, fruit juice, wine, peas, beans, etc.

The packaging machine 1 may also produce packages 2 of a food product that is pourable when producing packages 2, and sets after packages 2 are sealed. One example of such a food product is a portion of cheese, which is melted when producing packages 2, and sets after packages 2 are sealed.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

The packaging material also comprises a layer of gas- and light-barrier material made of electrically conductive material, e.g. aluminium foil, which is superimposed on a layer of heat-seal plastic material, and is in turn covered with another layer of heat-seal plastic material forming the inner face of the package eventually contacting the food product.

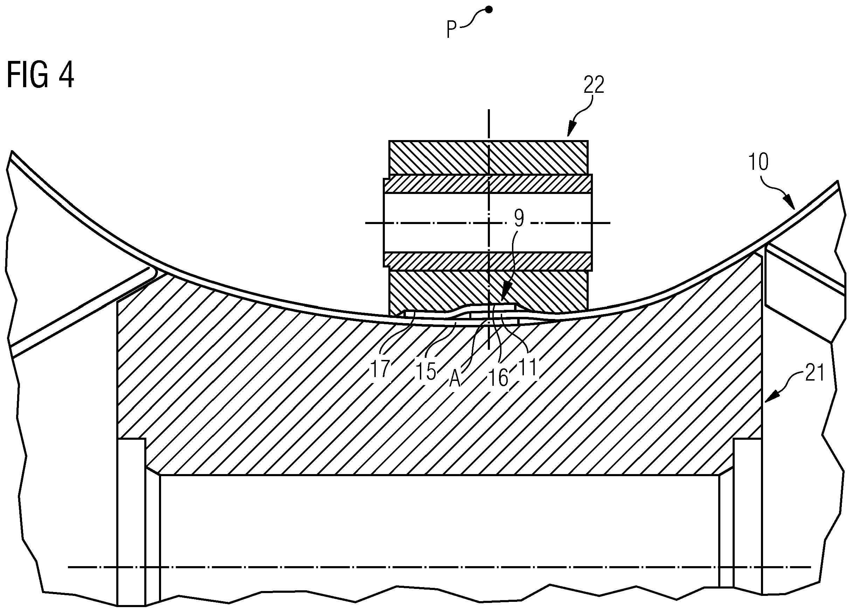

More specifically, the web 3 is fed along the forming path P by guide members 5, e.g. rollers or similar, and successively through a number of work stations, of which are shown schematically: a strip sealing station 6 for applying a sealing strip 9 (shown enlarged in thickness in Figure 4 for the sake of clarity) to the web 3, a forming station 7 for forming a tube 10 of packaging material and a heat-sealing station 8 for forming a longitudinal seal 14 along the tube 10. The longitudinal seal 14 is continuous and extends along an advancing direction V parallel to the forming path P.

The packaging machine 1 also comprises a filling device 12 for pouring the sterilized or sterile-processed food product continuously into the tube 10 of packaging material, and a jaw-type forming assembly (not shown) for gripping, sealing, and cutting the tube 10 along equally spaced cross sections to form a succession of packages 2.

More specifically, at the strip sealing station 6, a longitudinal edge 11, parallel to the forming path P, of the web 3 is first heated to melt the heat-seal plastic material layer. The web 3 has a further longitudinal edge 15 opposite to the longitudinal edge 11 and also parallel to the forming path P.

Next, a portion 16 of the sealing strip 9 is first applied to the face of the longitudinal edge 11 eventually facing inwards of the packages 2, while a further portion 17 of the sealing strip 9 projects from the longitudinal edge 11.

Finally, the sealing strip 9 is pressed onto the longitudinal edge 11.

More specifically, the sealing strip 9 is made of heat-seal plastic material.

The sealing strip 9 prevents the longitudinal edge 11 from absorbing the food product once the tube 10 and the longitudinal seal 14 are formed, and also provides for improving the gas-barrier performance and physical strength of the longitudinal seal 14.

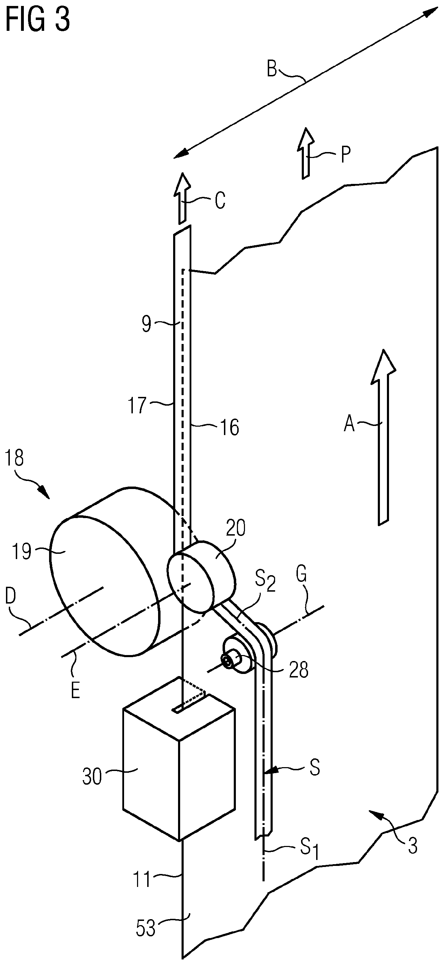

With particular reference to Figure 3, the sealing strip 9 is fed within the strip sealing station 6 in an first direction A along an advancing path S having a straight portion C in common with the forming path P, along which the sealing strip 9 is heat sealed under pressure to the longitudinal edge 11 forming the inner face of packages 2 eventually contacting the food product.

More specifically, the advancing path S comprises, in addition to the portion C in common with the forming path P, a straight upstream portion S₁ parallel to the adjacent portion of the forming path P, and an oblique portion S₂ connecting the straight upstream portion S₁ to the straight portion C.

The strip sealing station 6 comprises a pressing device 18 for pressing the sealing strip 9 onto the web 3 and defining the straight portion C of the advancing path S, and an induction heating sealing device 30 for heating the sealing strip 9 along the advancing path S upstream from the pressing device 18.

The pressing device 18 comprises a first pressure roller 19, having a first axis D, and a second pressure roller 20, having a second axis E parallel to the first axis D.

The first pressure roller 19 and the second pressure roller 20 rotates in opposite directions, and are located adjacent to each other to define a small-section passage through which the sealing strip 9 and a portion 53 of the web 3 containing the longitudinal edge 11 are rolled simultaneously. In particular, the first axis D and the second axis E are parallel to the web 3 and perpendicular to the straight portion C and to the travelling direction of the web 3 and the sealing strip 9 through the first roller 19 and the second roller 20.

In the embodiment shown, the sealing strip 9 extends about the second pressure roller 20 and about a guide roller 28 having an axis G parallel to the first axis D and the second axis E and located at the junction of the straight upstream portion S₁ and the oblique portion S₂.

The induction heating sealing device 30 comprises an inductive element 100 having a first leg 31 extending along the first direction A (and along the forming path P) and a second leg 32 extending along the first direction A (and along the forming path P).

The first leg 31 has a first body 33 facing a second body 34 of the second leg 32 and at least one projection 35 laterally projecting from the first body 33.

The first leg 31 comprises at least one slit 36 extending through the first body 33.

The at least one slit 36 is arranged in a second direction B transversal to the first direction A. In the embodiment shown, the second direction B is perpendicular to the first direction A.

The at least one slit 36 also partly extends through the at least one projection 35.

The at least one projection 35 comprises a first portion 41 transversal to the first direction A and having a first end 42 connected to the first body 33 and a second end 43 opposite to the first end 42. The first portion 41 projects from an edge 54 of the first body 33. In the embodiment shown, the first portion 41 extends along the second direction B.

The at least one projection 35 comprises a second portion 44 transversal to the first direction A and having a further first end 45 connected to the first body 33 and a further second end 46 opposite to the further first end 45. The second portion 44 projects from the edge 54 of the first body 33. In the embodiment shown, the second portion 44 extends along the second direction B.

The at least one projection 35 comprises a third portion 47 transversal to the first portion 41 and the second portion 44. The third portion 47 connects the second end 43 and the further second end 46. In the embodiment shown, the third portion 47 extends along the second direction B.

The first portion 41, the second portion 44 and the third portion 47 are arranged on three sides of a portion 39 of the slit 36 that extends in the at least one projection 35.

In this way, the at least one projection 35 is C-shaped, with a concave part 37 of the C-shape directed towards the first body 33 and a convex part 38 of the C-shape protruding away from the first body 33.

In the embodiment shown, the first leg 31 comprises a plurality of projections 35 and a plurality of slits 36 arranged so that the first leg 31 has a sealing part 40 - intended to interact with the packaging material to heat the packaging material - which has a polygonal shape.

The polygonal shape is defined by a plurality of straight segments defined by the first portions 41, the second portions 44 and the third portions 47.

The sealing part 40, therefore, has the general shape of a battlement having a plurality of merlons defined by the first portions 41, the second portions 44 and the third portions 47.

The first portion 41 has a first width W1 measured along the first direction A.

The second portion 44 has a second width W2 measured along the first direction A.

The third portion 47 has a third width W3 measured along the second direction B.

The first leg 32 has a width W4 measured along the second direction B.

The second leg 32 has a further width W5 measured along the second direction B.

In the embodiment shown, the width W4 is greater than the first width W1, the second width W2 and the third width W3.

In the embodiment shown, the further width W5 is greater than the first width W1, the second width W2 and the third width W3.

In the embodiment shown, the first width W1, the second width W2 and the third width W3 are equal to each other.

In the embodiment shown, the width W4 is equal to the further width W5.

The first body 33 and the second body 34 are made of electrically conductive material and define an electric circuit within which an alternate current - generated by a high-frequency alternate current generator (not shown) - flows, in use.

In particular, the first body 33 comprises a first end zone 48 intended to be connected to the high-frequency alternate current generator and a second end zone 49 opposite to the first end zone 48. The second body 34 comprises a further first end zone 50 intended to be connected to the high-frequency alternate current generator and a further second end zone 51 opposite to the further first end zone 50.

The second end zone 49 is electrically connected to the further second end zone 51.

The first body 33 and the second body 34 faces one another and an electrically insulating layer 52 is interposed between the first body 33 and the second body 34.

In the embodiment shown, the first leg 31 and the second leg 32 are made of metal plates having substantially the same shape and differing from each other in that the first body 33 is crossed by a plurality of slits 36, extending in the second direction B, and the first leg 31 comprises a plurality of projections 35 that protrude from the first body 33 and are not superimposed to the second body 34.

When the induction heating sealing device is connected to the high-frequency alternate current generator, the alternate current flows in the first leg 31 and - due to the slits 35 that crosses the first body 33 - passes through the first portions 41, the second portions 44 and the third portions 47. Then, since the second end zone 49 is connected to the further end zone 51, the alternate current flows through the second body 34.

The projections 35, i.e. the sealing part 40 of the first leg 31, faces, in use, the area 53 of the packaging material, which comprises the longitudinal edge 11.

The first body 33 and the second body 34 do not face, in use, the packaging material, but are arranged on one side of - at a distance from - the packaging material.

The first leg 31 and the second leg 32, and therefore the first body 33 and the second body 34, are arranged on the same side of the packaging material. In other words, at the strip sealing station 8, the packaging material defines a plane and the first leg 32 and the second leg 32 are arranged on the same side with respect to such plane.

The alternate current that flows inside the first leg 31, i.e. inside the projections 35, generates an eddy current in the aluminium layer that - when the packaging material is advanced along the first direction A - is strong enough to melt the heat-seal plastic material layer at the area 53.

The alternate current that flows inside the second leg 32 does not generate any eddy current in the aluminium layer since the second leg does not face - and is at a distance from - the packaging material.

In other words, the projection 35 - and the portion of the first body 33 connecting the projections 35 to each other - act as an active branch (i.e. capable of melting the polyethylene layer) of the electric circuit of the induction heating device 30, whilst the second leg 32 simply acts as a return branch of the electric circuit of the induction heating device 30.

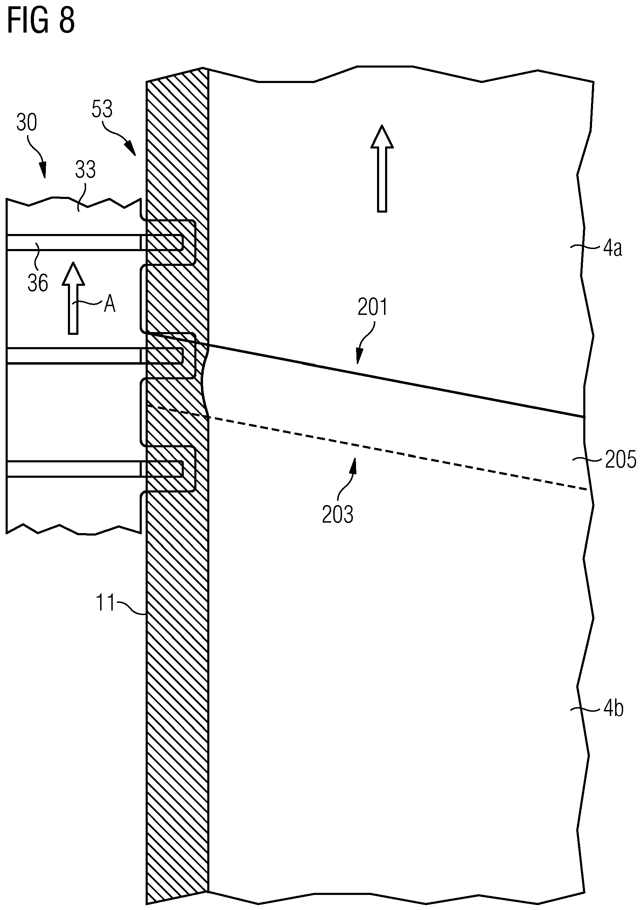

In Figure 8, the hatching illustrates the heating pattern generated by the induction heating sealing device 30 at a splice area 205, i.e. a region at which a trailing edge 201 of an exhausted reel 4a of packaging material is sealed to a leading edge 203 of a new reel 4b of packaging material.

The eddy currents describe a closed loop around each of the projections 35.

In this way, the eddy currents are mainly perpendicular to the first direction A and substantially parallel to the splice area 205. Due to this, very small or negligible border effects are produced.

The heating pattern generated by the induction heating sealing device 30, therefore, is substantially uniform both along the first direction A and the second direction B. In particular, the heating pattern does not comprise a cold zone.

The forming station 7 comprises a number of forming assemblies 13 arranged successively along the forming path P, and which interact gradually with the web 3 to fold it into the form of the tube 10.

More specifically, the forming assemblies 13 comprise a plurality of rollers defining respective compulsory passages for the packaging material. The respective sections of the compulsory passages vary gradually from a C shape to a substantially circular shape.

More specifically, the axes of the rollers in each forming assembly 13 lie in a plane that is arranged transversally - perpendicularly in the embodiment shown - to the forming path P.

The forming assemblies 13 gradually form the tube 10, so that the further longitudinal edge 15 is located outwards of the longitudinal edge 11 with respect to the axis of the tube 10. More specifically, when forming the tube 10, the sealing strip 9 is located inside the tube 10, and the inner face of the further longitudinal edge 15 is superimposed partly on the further portion 17 of the sealing strip 9, and partly on the outer face of the longitudinal edge 11 (Figure 4).

The heat-sealing station 8 comprises a sealing device (not shown) for heating the further longitudinal edge 15 and locally melting the heat-seal plastic material layer of the further longitudinal edge 15. Heat is transmitted by conduction from the further longitudinal edge 15 to the longitudinal edge 11 and the sealing strip 9, so as to locally melt the heat-seal plastic material layer of the longitudinal edge 11 and the heat-seal material of the sealing strip 9.

The heat-sealing station 8 also comprises a number of forming rollers 21 defining a compulsory circular passage for the tube 10; and one or more pressure rollers 22 for pressing the further portion 17 of the sealing strip 9, and the portion 16 of the sealing strip 9 and the longitudinal edge 11 onto the face of the further longitudinal edge 15 inside the tube 10, so that the heat-seal plastic material layers of the longitudinal edge 11 and the further longitudinal edge 15 and the heat-seal material of the sealing strip 9 blend completely to form the molecular bonds defining the longitudinal seal 14 of the tube 10.

More specifically, the rollers 21 are located outside the tube 10, and the pressure rollers 22 inside the tube 10.

The heat-sealing station 8 also comprises an annular support 29 which surrounds the tube 10 and supports the rollers 21.

During operation of the packaging machine 1 the web 3 is unwound off the reel 4 and fed along path P.

More specifically, the web 3 is fed by the guide members 5 along the path P and, in succession, through the strip sealing station 6, the forming station 7 and the heat-sealing station 8.

At the strip sealing station 6, the longitudinal edge 11 is heated by the induction heating sealing device 30, and - by means of the pressing device 18 - the portion 16 of the sealing strip 9 is applied to the face of the longitudinal edge 11 eventually facing inwards of the packages 2. Once the portion 16 is applied to the longitudinal edge 11 the further portion 17 projects from the longitudinal edge 11.

In particular, the alternate current flowing in the projections 35 generates an eddy current in the packaging material forming the longitudinal edge 11. This eddy current results, in turn, in the heating of the longitudinal edge 11.

Subsequently, the longitudinal edge 11 and the sealing strip 9 are compressed between the first pressure roller 19 and the second pressure roller 20 to blend the heat-seal plastic material layer of the longitudinal edge 11 and the heat-seal material of the sealing strip 9, and so form the molecular bonds.

Next, the web 3 interacts gradually with the forming assemblies 13, and is folded to superimpose the longitudinal edge 11 and the further longitudinal edge 15 and form the tube 10 not yet sealed longitudinally.

More specifically, the forming assemblies 13 fold the web 3 so that the sealing strip 9 is located inside the as yet unsealed tube 10, the further longitudinal edge 15 is located radially outwards of the longitudinal edge 11 and the further portion 17 with respect to the axis of the tube 10 still to be sealed longitudinally, and the longitudinal edge 11 is located radially outwards of the portion 16.

The seal 14 is formed, in the heat-sealing station 8, by sealing to the inner face of the further longitudinal edge 15 the further portion 17 and the face of the longitudinal edge 11 on the opposite side to the portion 16.

More precisely, there is provided a sealing device (not shown) that heats the further longitudinal edge 15 to melt the heat-seal plastic material layer. Heat is transmitted by conduction from the further longitudinal edge 15 to the longitudinal edge 11 and the sealing strip 9 to melt the polyethylene layer of the longitudinal edge 11 and the heat-seal material of the sealing strip.

The longitudinally sealed tube 10 is filled continuously with the pourable food product by the filling device 12, and is then fed through a jaw-type forming assembly (not shown) where it is gripped, sealed, and cut along equally spaced cross sections to form a succession of packages 2.

The advantages of the induction heating sealing device 30 according to the invention will be clear from the foregoing description.

In particular, the projections 35 define a plurality, or an array, of one-turn inductive elements electrically connected in series to each other by the first body 33 (which acts as a bus bar) facing the second body 34 (which acts as a return conductor).

The eddy currents are generated in the packaging material substantially only by the first body 33 (especially by the projections 35) and not by the second body 34.

In this way, the eddy currents are essentially perpendicular to the advancing direction of the packaging material and perpendicular to the splice area. The discontinuity formed by the splice area is, therefore, negligible and the heating pattern generated by the eddy currents is rather uniform, and definitely more uniform than the heating pattern obtained with the known induction heating sealing devices.

In this way, the risk that the heat-seal plastic material layer is not properly melt by the eddy currents - and therefore the sealing strip is not properly sealed to the packaging material - is highly reduced with respect to the known induction heating sealing devices.

Clearly, changes may be made to induction heating sealing device as described and illustrated herein without, however, departing from the scope of the present invention as defined in the accompanying claims.

In particular, the induction heating sealing device according to the invention could be used not only in the strip sealing station 6 to seal the sealing strip 9 to the longitudinal edge 11, but also in the heat-sealing station 8 to seal the further longitudinal edge 15 to the longitudinal edge 11 and to the sealing strip 9, so as to form the closed tube 10.

## Claims

1. An induction heating sealing device (30) for sealing a packaging material comprising an electrically conductive layer and advancing, in use, along a first direction (A), said induction heating sealing device (30) comprising an inductive element (100), said inductive element (100) comprising a first leg (31) and a second leg (32) extending along said first direction (A) and within which, in use, an alternate current flows, said first leg (31) having a first body (33) facing a second body (34) of said second leg (32) and at least one projection (35) laterally projecting from said first body (33) and facing, in use, an area (53) of said packaging material to be sealed and being configured to induce, in use, an eddy current within said area (53), wherein said first body (33) and said second body (34) are made of electrically conductive material and define an electric circuit within which an alternate current flows, in use, **characterized in that** said first leg (31) further comprises at least one slit (36) extending through said first body (33), and **in that** said first leg (31) comprises a plurality of projections (35) and a plurality of slits (36) arranged so that said first leg (31) has a sealing part (40), intended to interact with said packaging material to heat said packaging material, which has a polygonal shape, and **in that** said first body (33) and said second body (34) face one another and an electrically insulating layer (52) is interposed between said first body (33) and said second body (34), said projections (35) extending from a side edge (54) of said first body (33) and being not superimposed to said second body (34).

2. An induction heating sealing device according to claim 1, wherein said at least one slit (36) is arranged in a second direction (B) transversal to said first direction (A).

3. An induction heating sealing device according to claim 2, wherein said second direction (B) is perpendicular to said first direction (A).

4. An induction heating sealing device according to any one of the preceding claims, wherein said at least one slit (36) partly extends through said at least one projection (35).

5. An induction heating sealing device according to any one of claims 2 to 4, wherein said at least one projection (35) comprises a first portion (41) transversal to said first direction (A) and having a first end (42) connected to said first body (33) and a second end (43) opposite to said first end (42), wherein said at least one projection (35) further comprises a second portion (44) transversal to said first direction (A) and having a further first end (45) connected to said first body (33) and a further second end (46) opposite to said further first end (45), and wherein said at least one projection (35) comprises a third portion (47) transversal to said first portion (41) and said second portion (44), said third portion (47) connecting said second end (43) and said further second end (46).

6. An induction heating sealing device according to claim 5, wherein said first portion (41) and said second portion (44) extend along said second direction (B), and wherein said third portion (47) extends along said first direction (A).

7. An induction heating sealing device according to claim 6, wherein said first portion (41), said second portion (44) and said third portion (47) are arranged on three sides of a portion (39) of said slit (36) that extends in said at least one projection (35), so that said at least one projection (35) is C-shaped with a concave part (37) of the C-shape directed towards said first body (33) and a convex part (38) of the C-shape projecting away from said first body (33).

8. An induction heating sealing device according to any one of claims 5 to 7, wherein said polygonal shape is formed by a plurality of straight segments defined by said first portions (41), said second portions (44) and said third portions (47).

9. An induction heating sealing device according to any one of the preceding claims, wherein said projections (35) define an array of one-turn inductive elements extending along said first direction (A) and electrically connected in series to each other by said first body (33), which acts as a bus bar, said first body (33) facing said second body (34), which acts as a return conductor.

10. An induction heating sealing device according to any one of the preceding claims, wherein said at least one projection (35) faces, in use, said area (53), and wherein said second body (34) do not face, in use, said packaging material, said second body (34) being arranged on one side of, and at a distance from, said packaging material.

11. An induction heating sealing device according to any one of the preceding claims, wherein said projections (35) act, in use, as an active branch of said electric circuit capable of generating eddy currents in said packaging material, whilst said second leg (32) acts, in use, as a return branch of said electric circuit.

12. An induction heating sealing device according to any one of the preceding claims, wherein said first body (33) comprises a first end zone (48) intended to be connected to a high-frequency alternate current generator and a second end zone (49) opposite to said first end zone (48), wherein said second body (34) comprises a further first end zone (50) intended to be connected to said high-frequency alternate current generator and a further second end zone (51) opposite to said further first end zone (50), said second end zone (49) being electrically connected to said further second end zone (51).

13. An induction heating sealing device according to any one of the preceding claims, wherein said first leg (31) and said second leg (32) are arranged on the same side with respect to a plane defined by said packaging material.

## Patentansprüche

1. Induktions-Heißsiegelvorichtung (30) zur Versiegelung eines Verpackungsmaterials, das eine elektrisch leitende Schicht umfasst und sich im Gebrauch entlang einer ersten Richtung (A) vorwärtsbewegt, wobei die Induktions-Heißsiegelvorichtung (30) ein induktives Element (100) umfasst, das induktive Element (100) einen ersten Abschnitt (31) und einen zweiten Abschnitt (32) umfasst, die sich entlang der ersten Richtung (A) erstrecken und in denen im Gebrauch ein Wechselstrom fließt, wobei der erste Abschnitt (31) einen ersten Körper (33), der einem zweiten Körper (34) des zweiten Abschnitts (32) zugewandt ist, und mindestens einen Überstand (35), der seitlich von dem ersten Körper (33) übersteht und im Gebrauch einem Bereich (53) des Verpackungsmaterials zugewandt ist, das zu versiegeln ist, aufweist, und dazu ausgebildet ist, im Gebrauch einen Wirbelstrom innerhalb des Bereichs (53) zu induzieren, wobei der erste Körper (33) und der zweite Körper (34) aus elektrisch leitendem Material hergestellt sind und einen Stromkreis definieren, in dem im Gebrauch ein Wechselstrom fließt, **dadurch gekennzeichnet, dass** der erste Abschnitt (31) ferner mindestens einen Schlitz (36) umfasst, der sich durch den ersten Körper (33) erstreckt, und dadurch, dass der erste Abschnitt (31) eine Mehrzahl von Überständen (35) und eine Mehrzahl von Schlitzen (36) aufweist, die so angeordnet sind, dass der erste Abschnitt (31) einen Versiegelungsteil (40) aufweist, der dazu bestimmt ist, mit dem Verpackungsmaterial zusammenzuwirken, um das Verpackungsmaterial zu erhitzen, der eine mehreckige Form aufweist, und dadurch, dass der erste Körper (33) und der zweite Körper (34) einander zugewandt sind und eine elektrisch isolierende Schicht (52) zwischen dem ersten Körper (33) und dem zweiten Körper (34) liegt, wobei sich die Überstände (35) von einer Seitenkante (54) des ersten Körpers (33) erstrecken und nicht über dem zweiten Körper (34) gelagert sind.

2. Induktions-Heißsiegelvorichtung nach Anspruch 1, wobei der mindestens eine Schlitz (36) in einer zweiten Richtung (B) quer zu der ersten Richtung (A) angeordnet ist.

3. Induktions-Heißsiegelvorichtung nach Anspruch 2, wobei die zweite Richtung (B) senkrecht zu der ersten Richtung (A) verläuft.

4. Induktions-Heißsiegelvorichtung nach einem der vorhergehenden Ansprüche, wobei sich der mindestens eine Schlitz (36) durch den mindestens einen Überstand (35) erstreckt.

5. Induktions-Heißsiegelvorichtung nach einem der Ansprüche 2 bis 4, wobei der mindestens eine Überstand (35) einen ersten Abschnitt (41) umfasst, der quer zu der ersten Richtung (A) verläuft und ein erstes Ende (42), das mit dem ersten Körper (33) verbunden ist, und ein zweites Ende (43) gegenüber dem ersten Ende (42) aufweist, wobei der mindestens eine Überstand (35) ferner einen zweiten Abschnitt (44) umfasst, der quer zu der ersten Richtung (A) verläuft und ein weiteres erstes Ende (45), das mit dem ersten Körper (33) verbunden ist, und ein weiteres zweites Ende (46) gegenüber dem weiteren ersten Ende (45) aufweist, und wobei der mindestens eine Überstand (35) einen dritten Abschnitt (47) umfasst, der quer zu dem ersten Abschnitt (41) und dem zweiten Abschnitt (44) verläuft, wobei der dritte Abschnitt (47) das zweite Ende (43) und das weitere zweite Ende (46) verbindet.

6. Induktions-Heißsiegelvorichtung nach Anspruch 5, wobei sich der erste Abschnitt (41) und der zweite Abschnitt (44) entlang der zweiten Richtung (B) erstrecken und wobei sich der dritte Abschnitt (47) entlang der ersten Richtung (A) erstreckt.

7. Induktions-Heißsiegelvorichtung nach Anspruch 6, wobei der erste Abschnitt (41), der zweite Abschnitt (44) und der dritte Abschnitt (47) auf drei Seiten eines Abschnitts (39) des Schlitzes (36) angeordnet sind, der sich in dem mindestens einen Überstand (35) erstreckt, so dass der mindestens eine Überstand (35) C-förmig ist, wobei ein konkaver Teil (37) der C-Form in Richtung des ersten Körpers (33) gerichtet ist und ein konvexer Teil (38) der C-Form weg von dem ersten Körper (33) übersteht.

8. Induktions-Heißsiegelvorichtung nach einem der Ansprüche 5 bis 7, wobei die mehreckige Form von einer Mehrzahl von geraden Segmenten gebildet ist, die von den ersten Abschnitten (41), den zweiten Abschnitten (44) und den dritten Abschnitten (47) definiert sind.

9. Induktions-Heißsiegelvorichtung nach einem der vorhergehenden Ansprüche, wobei die Überstände (35) eine Anordnung von induktiven Elementen mit einer Windung definieren, die sich entlang der ersten Richtung (A) erstrecken und durch den ersten Körper (33) in Reihe miteinander elektrisch verbunden sind, die als eine Stromschiene fungiert, wobei der erste Körper (33) dem zweiten Körper (34) zugewandt ist, der als ein Rückleiter fungiert.

10. Induktions-Heißsiegelvorichtung nach einem der vorhergehenden Ansprüche, wobei der mindestens eine Überstand (35) im Gebrauch dem Bereich (53) zugewandt ist und wobei der zweite Körper (34) dem Verpackungsmaterial im Gebrauch nicht zugewandt ist, wobei der zweite Körper (34) auf einer Seite von dem Verpackungsmaterial und in einem Abstand davon angeordnet ist.

11. Induktions-Heißsiegelvorichtung nach einem der vorhergehenden Ansprüche, wobei die Überstände (35) im Gebrauch als ein aktiver Zweig des Stromkreises fungieren, der geeignet ist, Wirbelströme in dem Verpackungsmaterial zu erzeugen, während der zweite Abschnitt (32) im Gebrauch als ein Rücklaufzweig des Stromkreises fungiert.

12. Induktions-Heißsiegelvorichtung nach einem der vorhergehenden Ansprüche, wobei der erste Körper (33) einen ersten Endbereich (48), der dazu bestimmt ist, mit einem Hochfrequenzwechselstromgenerator verbunden zu sein, und einen zweiten Endbereich (49) gegenüber dem ersten Endbereich (48) umfasst, wobei der zweite Körper (34) einen weiteren ersten Endbereich (50), der dazu bestimmt ist, mit dem Hochfrequenzwechselstromgenerator verbunden zu sein, und einen weiteren zweiten Endbereich (51) gegenüber dem weiteren ersten Endbereich (50) umfasst, wobei der zweite Endbereich (49) mit dem weiteren zweiten Endbereich (51) elektrisch verbunden ist.

13. Induktions-Heißsiegelvorichtung nach einem der vorhergehenden Ansprüche, wobei der erste Abschnitt (31) und der zweite Abschnitt (32) auf derselben Seite bezogen auf eine Ebene angeordnet sind, die von dem Verpackungsmaterial definiert ist.

## Revendications

1. Dispositif de scellage à chauffage par induction (30) pour sceller un matériau d'emballage comprenant une couche électriquement conductrice et faire avancer, durant l'utilisation, le long d'une première direction (A), ledit dispositif de scellage à chauffage par induction (30) comprenant un élément inductif (100), ledit élément inductif (100) comprenant une première section (31) et une seconde section (32) s'étendant le long de ladite première direction (A) et à l'intérieur desquelles, durant l'utilisation, un courant alternatif circule, ladite première section (31) ayant un premier corps (33) faisant face à un second corps (34) de ladite seconde section (32) et au moins une saillie (35) faisant saillie latéralement à partir dudit premier corps (33) et faisant face à, durant l'utilisation, une zone (53) dudit matériau d'emballage destiné à être scellé et étant configurée pour induire, durant l'utilisation, un courant de Foucault à l'intérieur de ladite zone (53), dans lequel ledit premier corps (33) et ledit second corps (34) sont faits de matériau électriquement conducteur et définissent un circuit électrique à l'intérieur duquel un courant alternatif circule, durant l'utilisation, **caractérisé en ce que** ladite première section (31) comprend en outre au moins une fente (36) s'étendant à travers ledit premier corps (33), et **en ce que** ladite première section (31) comprend une pluralité de saillies (35) et une pluralité de fentes (36) agencées pour que ladite première section (31) ait une partie de scellage (40), prévue pour interagir avec ledit matériau d'emballage pour chauffer ledit matériau d'emballage, qui a une forme polygonale, et **en ce que** ledit premier corps (33) et ledit second corps (34) se font face et une couche électriquement isolante (52) est interposée entre ledit premier corps (33) et ledit second corps (34), lesdites saillies (35) s'étendant à partir d'un bord latéral (54) dudit premier corps (33) et n'étant pas superposées sur ledit second corps (34).

2. Dispositif de scellage à chauffage par induction selon la revendication 1, dans lequel ladite au moins une fente (36) est agencée dans une seconde direction (B) transversale à ladite première direction (A).

3. Dispositif de scellage à chauffage par induction selon la revendication 2, dans lequel ladite seconde direction (B) est perpendiculaire à ladite première direction (A).

4. Dispositif de scellage à chauffage par induction selon l'une quelconque des revendications précédentes, dans lequel ladite au moins une fente (36) s'étend partiellement à travers ladite au moins une saillie (35).

5. Dispositif de scellage à chauffage par induction selon l'une quelconque des revendications 2 à 4, dans lequel ladite au moins une saillie (35) comprend une première portion (41) transversale à ladite première direction (A) et ayant une première extrémité (42) raccordée audit premier corps (33) et une seconde extrémité (43) opposée à ladite première extrémité (42), dans lequel ladite au moins une saillie (35) comprend en outre une deuxième portion (44) transversale à ladite première direction (A) et ayant une première extrémité supplémentaire (45) raccordée audit premier corps (33) et une seconde extrémité supplémentaire (46) opposée à ladite première extrémité supplémentaire (45), et dans lequel ladite au moins une saillie (35) comprend une troisième portion (47) transversale à ladite première portion (41) et ladite deuxième portion (44), ladite troisième portion (47) raccordant ladite seconde extrémité (43) et ladite seconde extrémité supplémentaire (46).

6. Dispositif de scellage à chauffage par induction selon la revendication 5, dans lequel ladite première portion (41) et ladite deuxième portion (44) s'étendent le long de ladite seconde direction (B), et dans lequel ladite troisième portion (47) s'étend le long de ladite première direction (A).

7. Dispositif de scellage à chauffage par induction selon la revendication 6, dans lequel ladite première portion (41), ladite deuxième portion (44) et ladite troisième portion (47) sont agencées sur trois côtés d'une portion (39) de ladite fente (36) qui s'étend dans ladite au moins une saillie (35), pour que ladite au moins une saillie (35) soit en forme de C avec une partie concave (37) de la forme de C dirigée vers ledit premier corps (33) et une partie convexe (38) de la forme de C faisant saillie en s'éloignant dudit premier corps (33).

8. Dispositif de scellage à chauffage par induction selon l'une quelconque des revendications 5 à 7, dans lequel ladite forme polygonale est formée par une pluralité de segments droits définis par lesdites premières portions (41), lesdites deuxièmes portions (44) et lesdites troisièmes portions (47).

9. Dispositif de scellage à chauffage par induction selon l'une quelconque des revendications précédentes, dans lequel lesdites saillies (35) définissent une série d'éléments inductifs à une spire s'étendant le long de ladite première direction (A) et électriquement connectés en série les uns aux autres par ledit premier corps (33), qui sert de barre omnibus, ledit premier corps (33) faisant face audit second corps (34), qui sert de conducteur de retour.

10. Dispositif de scellage à chauffage par induction selon l'une quelconque des revendications précédentes, dans lequel ladite au moins une saillie (35) fait face, durant l'utilisation, à ladite zone (53), et dans lequel ledit second corps (34) ne fait pas face, durant l'utilisation, audit matériau d'emballage, ledit second corps (34) étant agencé sur un côté et à une distance dudit matériau d'emballage.

11. Dispositif de scellage à chauffage par induction selon l'une quelconque des revendications précédentes, dans lequel lesdites saillies (35) servent, durant l'utilisation, de branche active dudit circuit électrique capable de générer des courants de Foucault dans ledit matériau d'emballage, alors que ladite seconde section (32) sert, durant l'utilisation, de branche de retour dudit circuit électrique.

12. Dispositif de scellage à chauffage par induction selon l'une quelconque des revendications précédentes, dans lequel ledit premier corps (33) comprend une première zone d'extrémité (48) prévue pour être connectée à un générateur de courant alternatif à haute fréquence et une seconde zone d'extrémité (49) opposée à ladite première zone d'extrémité (48), dans lequel ledit second corps (34) comprend une première zone d'extrémité supplémentaire (50) prévue pour être connectée audit générateur de courant alternatif à haute fréquence et une seconde zone d'extrémité supplémentaire (51) opposée à ladite première zone d'extrémité supplémentaire (50), ladite seconde zone d'extrémité (49) étant électriquement connectée à ladite seconde zone d'extrémité supplémentaire (51).

13. Dispositif de scellage à chauffage par induction selon l'une quelconque des revendications précédentes, dans lequel ladite première section (31) et ladite seconde section (32) sont agencées sur le même côté par rapport à un plan défini par ledit matériau d'emballage.
